# EUROPÄISCHE PATENTANMELDUNG

(11) **EP 0 681 063 A2**
(43) Veröffentlichungstag der Anmeldung: **08.11.1995**
(21) Anmeldenummer: 95106853.5
(22) Anmeldetag: 05.05.1995
(51) Int. Cl.: E01C 23/088, B60G 17/04

(54) **Fräsmaschine**

(30) Priorität: 05.05.1994 DE 9407487 U
(71) Anmelder: Humme, Thomas, D-52385 Nideggen (DE)
(72) Erfinder: Humme, Thomas, D-52385 Nideggen (DE)
(74) Vertreter: Borchert, Uwe Rudolf, Dipl.-Ing.

(57) **Zusammenfassung**

Fräsmaschine (10), die zum Abfräsen von Oberflächenbelägen (B), insbesondere Asphalt, durch eine Zug- und/oder Schubmaschine (12) über den abzufräsenden Oberflächenbelag (B) verfahren wird, eine Fräswalze (38) und eine mit Rädern (40, 42), Rollen o.ä. verbundene Trageeinheit (54, 56, 58, 60), einen Antrieb für die relativ zur Trageeinheit (54, 56, 58, 60) höhenverstellbare und in der Trageeinheit (54, 56, 58, 60) gelagerte Fräswalze (38) sowie zumindest ein Rad (40, 42) aufweist, das gegenüber der Trageeinheit (54, 56, 58, 60) höhenverstellbar ausgebildet ist,
wobei die Höhenverstellung des Rads bzw. der Räder (40, 42) hydraulisch erfolgt.

## Beschreibung

Die Erfindung betrifft eine Fräsmaschine nach der im Oberbegriff des Patentanspruchs 1 angegebenen Art.

Derartige Fräsmaschinen sind in unterschiedlichen Ausführungsformen bekannt und werden zum Abfräsen von Oberflächenbelägen, wie Asphalt, Beton o.ä, insbesondere von Fahrbahndecken verwendet. Eine Fräswalze ist dabei in einer Trageeinheit, beispielsweise einem Gehäuse, der Fräsmaschine höhenverstellbar gelagert. Entsprechend dem Oberflächenabtrag wird die sich drehende Fräswalze in ihrer Höhe nach unten verstellt, fräst sich dabei um den verstellten Betrag der Fräswalze gegenüber der Trageeinheit in den Oberflächenbelag ein und wird dann in Richtung des abzutragenden Bereichs der Fahrbahndecke verfahren. Mit dem Verfahren wird der Oberflächenbelag kontinuierlich abgefräst. Zum Verfahren der Fräsmaschine ist eine Zug- und/oder Schubmaschine vorgesehen, die über ein Anschlußteil mit der Fräsmaschine verbunden ist. Zudem ist dafür die Fräsmaschine auf Rädern, Rollen o.ä. gelagert. Desweiteren ist zum Betrieb der Fräswalze ein entsprechender Antrieb mit Motor und Getriebe vorgesehen.

Zum Ausgleich von Höhenunterschieden der Fahrbahndecke bzw. des abzufräsenden Oberflächenbelags ist eine Spindel vorgesehen, über die die Räder manuell höhenverstellt werden können. Die unterschiedlichen Höhen der Oberflächenbeläge können u.a. dadurch entstehen, daß nebeneinander streifenweise der Oberflächenbelag der Fahrbahndecke durch die Fräsmaschine abgefräst wird, wobei der abzufräsende Streifen durch die Breite der Fräswalze definiert ist. Wurde ein Streifen des Oberflächenbelags abgefräst, so gibt es im Hinblick auf den benachbarten, noch abzufräsenden Streifen unterschiedliche Verfahrniveaus für die Räder der Fräsmaschine auf der Oberfläche, einmal nämlich das Niveau des abgefrästen Streifens der Fahrbahndecke und das andere Mal das Niveau des noch abzufräsenden Bereichs des Oberflächenbelags.

Die bekannten Fräsmaschinen haben den Nachteil, daß die Höhenverstellung der Räder sehr aufwendig ist und zur Einstellung der Räder jedesmal das Fräsverfahren der Fräsmaschine unterbrochen werden und eine Person unter einem verhältnismäßig hohen Kraftaufwand die Spindel verstellen muß. Dies ist zudem sehr zeitintensiv.

Der Erfindung liegt die Aufgabe Zugrunde, eine Fräsmaschine gemäß der im Oberbegriff des Anspruchs 1 angegebenen Art derart weiterzubilden, daß bei einfacher Konstruktion eine einfache Höhenverstellung des Rads bzw. der Räder jederzeit ohne weiteres möglich ist.

Diese Aufgabe wird durch die kennzeichnenden Merkmale des Anspruchs 1 in Verbindung mit den Oberbegriffsmerkmalen gelöst. Nunmehr ist es möglich, ein Rad der Fräsmaschine, auf ein anderes Niveau des Oberflächenbelags einfach, ohne hohen Kraftaufwand kontinuierlich zu verstellen, somit die Fräsmaschine an die vorgegebenen Gegebenheiten anzupassen und einen gleichmäßigen Abtrag des Oberflächenbelags auf ein einheitliches Niveau mit dem Verfahren der Fräsmaschine zu gewährleisten.

Gemäß einer bevorzugten Ausführungsform ist auf beiden Seiten der Fräswalze zumindest ein Rad vorgesehen, wobei die Räder unabhängig voneinander in der Trageeinheit hydraulisch höhenverstellbar gelagert sind. Dadurch wird die Anpaßbarkeit der Fräswalze an die durch den Oberflächenbelag vorgegebenen Bedingungen erhöht und der Einsatzbereich vergrößert. Beispielsweise, wenn eine Fahrbahndecke mit der Fräsmaschine streifenweise nacheinander abgetragen wird, ist es nunmehr auf einfache Weise möglich, daß zunächst ein erster Streifen in einer Richtung und der sich daran anschließende, benachbarte, abzutragende Streifen des Oberflächenbelags in die entgegengesetzte Richtung von der Fräswalze abgefräst wird, ohne die Fräsmaschine für Einstellarbeiten der Räder all zu lange anhalten zu müssen. Ein Zurückverfahren der Fräsmaschine, um lediglich in einer Richtung zu fräsen, ist durch diese Ausbildung nicht nötig. Eine Anpaßfräsung wird nunmehr auch ohne weiteres möglich, indem die Fräswalze beipielsweise in eine vorbestimmte Neigung durch die hydraulische Höhenverstellung der Räder gebracht wird und anschließend schräg zu einer Horizontalen gefräst wird.

Ein sicheres Verfahren der Fräsmaschine sowie ein sicherer Stand wird u.a. dadurch ermöglicht, daß sie auf jeder Seite zwei hintereinander angeordnete Räder, Rollen oder ähnliches aufweist.

Insbesondere sind gemäß einer weiteren Ausführungsform zumindest auf einer Seite der Fräswalze zwei Räder hintereinander angeordnet, in einem höhenverstellbaren Seitenteil gelagert und zusammen mit dem Seitenteil gegenüber der Trageeinheit höhenverstellbar ausgebildet. Zur Höhenverstellung der Räder wird nunmehr lediglich das Seitenteil mit den Rädern in bezug auf die Trageeinheit bewegt und entsprechend in die vorbestimmte Stellung zum Ausgleich des Oberflächeuniveaus z.B. der abzufräsenden Fahrbahndecke verfahren.

Insbesondere ist es günstig, daß auch die Höhenverstellung der Fräswalze ebenfalls hydraulisch erfolgt, um durch Verwendung gleicher oder ähnlicher Bauteile Kosten zu sparen. Dieser Effekt kann noch dadurch erhöht werden, daß nach einer weiteren Ausführungsform der Antrieb für die Fräswalze mit einem Hydraulikmotor versehen ist und dann vor allem die genannten Höhenverstelleinrichtungen sowie der Hydraulikmotor des Antriebs an eine gemeinsame Hydraulikquelle angeschlossen sind.

In der Regel haben herkömmliche Bagger, die vorzugsweise mit einem an einem Ausleger des Baggers angelenkten Werkzeugstiel versehen sind, eine Hydraulikquelle zur Betätigung ihrer Ausleger- bzw. der Werkzeugstielkinematik. Es ist deshalb günstig, daß die Hydraulikquelle in der Zug- bzw. Schubmaschine, wie einem Bagger, angeordnet und dafür ein Anschluß vorgesehen ist. Die Höhenverstellung kann nunmehr vom Bagger aus erfolgen, wordurch sich das Fräsverfahren abkürzen läßt.

Bei den Fräsmaschinen treten im allgemeinen während des Betriebs hohe Kräfte und Momente in den Lagern und Führungen auf. Um auf der einen Seite die auftretenden Kräfte und Momente optimal zu übertragen und auf der anderen Seite klein bauen zu können, ist das höhenverstellbare Rad oder das Seitenteil mit dem Rad bzw. den Rädern mit einem Führungszylinder verbunden, der in der Führungsbuchse der Trageeinheit verschiebbar gelagert und in den ein mit der Trageeinheit fest verbundener Kolben eingebracht ist. Durch den Führungszylinder wird gegenüber dem Kolben eine relativ große Führungsfläche sowie ein relativ großer Führungsquerschnitt erzeugt, der eine optimale Übertragung der Kräfte von dem Seitenteil auf die Führungsbuchse und somit auf die Trageeinheit und umgekehrt gewährleistet.

Vor allem ist dabei der Kolben über ein im wesentlichen um eine horizontale Achse drehbares Gelenk mit der Trageeinheit verbunden. Eine günstige Anordnung dafür ergibt sich insbesondere auch dadurch, daß der Kolben zwischen zwei Stützen angeordnet und an einem die Stützen miteinander verbindenden Joch angelenkt ist.

Wie bereits angesprochen wurde, stellen die während des Betriebs auftretenden Kräfte und Momente ein besonderes Problem für die Lager und Führungen und somit für die Mittel zur Höhenstellung der Fräsmaschine dar. Vor allem, wenn die Führungen zur Höhenverstellung der Räder bzw. der Seitenteile spielbehaftet sind, kann es zu einem "Schlagen" zwischen der Führungsbuchse und dem Führungszylinder kommen. Desweiteren verändern sich im Laufe der Zeit durch dieses "Schlagen" das Spiel und somit die Abstimmung der einzelnen Bauteile zueinander, so daß ein präzises Arbeiten mit der Fräsmaschine gefährdet sein könnte. Aus diesem Grunde ist es günstig, daß der Querschnitt des Führungszylinders änderbar ausgebildet ist, so daß eine im wesentlichen spielfreie Lagerung des Führungszylinders in der Führungsbuchse eingestellt werden kann bzw. ermöglicht wird. Der Führungszylinder ist dafür vorzugsweise durch den Druck der Hydraulikflüssigkeit elastisch verformbar.

Weitere Merkmale bilden die Gegenstände der anderen Unteransprüche.

Zusätzliche Vorteile und Merkmale ergeben sich aber auch aus der folgenden Beschreibung einer Ausführungsform der Erfindung im Zusammenhang mit der Zeichnung. Es zeigen:
- Fig. 1.: eine schematische Seitenansicht einer Fräsmaschine gemäß einer Ausführungsform der Erfindung mit einem Bagger als Zug- und Schubmaschine;
- Fig. 2: eine Schnittansicht von vorne gemäß der Linie II-II von Fig. 1;
- Fig. 3: eine Schnittansicht von vorne wie in Fig. 2, wobei jedoch nur ein Teil der Fräsmaschine auf einem anderen Niveau des Oberflächenbelags dargetellt ist;
- Fig. 4: eine Seitenansicht entsprechend dem Pfeil IV von Fig. 3;
- Fig. 5: eine Schnittansicht entlang der Linie V-V von Fig. 2;
- Fig. 6: eine Schnittansicht entlang der Linie VI-VI von Fig. 2;
- Fig. 7: eine Ansicht von unten entsprechend dem Pfeil VII von Fig. 6;
- Fig. 8: eine Schnittansicht entlang der Linie VIII-VIII von Fig. 2;
- Fig. 9: eine Schnittansicht entlang der Linie IX-IX von Fig. 8.

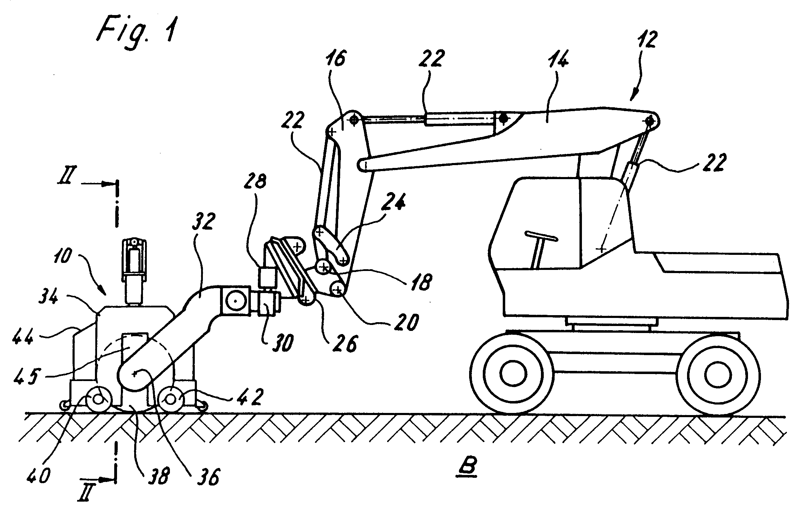

In Figur 1 ist eine Seitenansicht einer Fräsmaschine 10 mit einem an die Fräsmaschine 10 angeschlossenen Bagger 12 als Zug- und/oder Schubfahrzeug dargestellt. Der Bagger 12 ist mit einem Ausleger 14 und einem an den Ausleger 14 angelenkten Werkzeugstiel 16 versehen. Der Werkzeugstiel 16 weist an seinem freien Ende zwei Anlenkpunkte 18 und 20 auf. In bekannter Weise ist der Ausleger 14 mit dem Werkzeugstiel 16 und den Anlenkpunkten 18 und 20 mit einer Kinematik zum Bewegen eines hier nicht dargestellten Tieflöffels versehen. Dieser Antriebsmechanismus besteht aus mehreren Kolben/Zylinderanordnungen 22 sowie einem Schwenkhebel 24 und ist herkömmlicher Art, so daß darauf hier nicht näher eingegangen wird.

Die Anlenkpunkte 18 und 20 des Baggers 12 sind mit einer aus anderen Einsatzbereichen, beispielsweise im Zusammenwirken mit einem Tieflöffel bekannten Schnellwechselplatte 26 verbunden. Die Schnellwechselplatte 26 bildet das Anschlußteil der Fräsmaschine 10 für den Bagger 12. Über diese kann der Bagger 12 mit einem zugeordneten Schnellkupplungssystem am freien Ende seines Werkzeugstiels 16 einfach, d. h. binnen Sekunden, mit der Fräsmaschine 10 verbunden und davon wieder gelöst werden. Die Schnellwechselplatte 26 sowie das zugeordnete Schnellkupplungssystem bilden eine Schnellwechseleinrichtung, die u.a. unter dem Namen A-LOCK®-System von der Firma Wimmer Hartstahl bekannt ist. Aus diesem Grunde wird auf die genannte Schnellwechseleinrichtung bzw. Schnellkupplungseinrichtung im einzelnen nicht näher eingegangen.

Die Schnellwechselplatte 26 ist über zwei Gelenke 28 und 30 mit einer Schwinge 32 der Fräsmaschine 10 verbunden. Die Schwinge 32 ist U-förmig ausgebildet und umgreift zwei Seitenteile 34 der Fräsmaschine 10. An den freien Enden der beiden Schenkel der Schwinge 32 ist eine Welle 36 einer Fräswalze 38 gelagert. Über die Schwinge 32 und im Zusammenwirken mit einer weiter unten noch erläuterten Höhenverstelleinrichtung für die Fräswalze 38 ist diese in vorbestimmter Weise relativ zur Oberfläche des um einen vorbestimmten Betrag abzufräsenden Bodens B höhenverstellbar.

Das erste Gelenk 30 der Fräsmaschine 10 ermöglicht ein Verschwenken der Schwinge 32 um eine horizontale, zur Längsachse der Fräsmaschine 10 parallele Achse relativ zur Schnellwechselplatte 26. Durch das zweite Gelenk 28 ist die Schwinge 32 um eine im wesentlichen vertikale Achse relativ zur Schnellwechselplatte 26 verschwenkbar.

Die Fräsmaschine 10 besteht im wesentlichen aus zwei Seitenteilen 34, an deren unteren Ende jeweils zwei Räder 40 und 42 angeordnet sind, aus der genannten Schwinge 32 und einer Trageeinheit mit darin höhenverstellbar gelagerter Fräswalze 38.

Wie deutlich der Fig. 1 zu entnehmen ist, haben die Seitenteile 34 jeweils eine Ausnehmung 45, so daß die Schwinge 32 und die Fräswalze 38 mit einer die Fräswalze 38 zumindest teilweise umhüllenden Haube 44 in bezug auf den abzufräsenden Oberflächenbelag B höhenverstellbar ist.

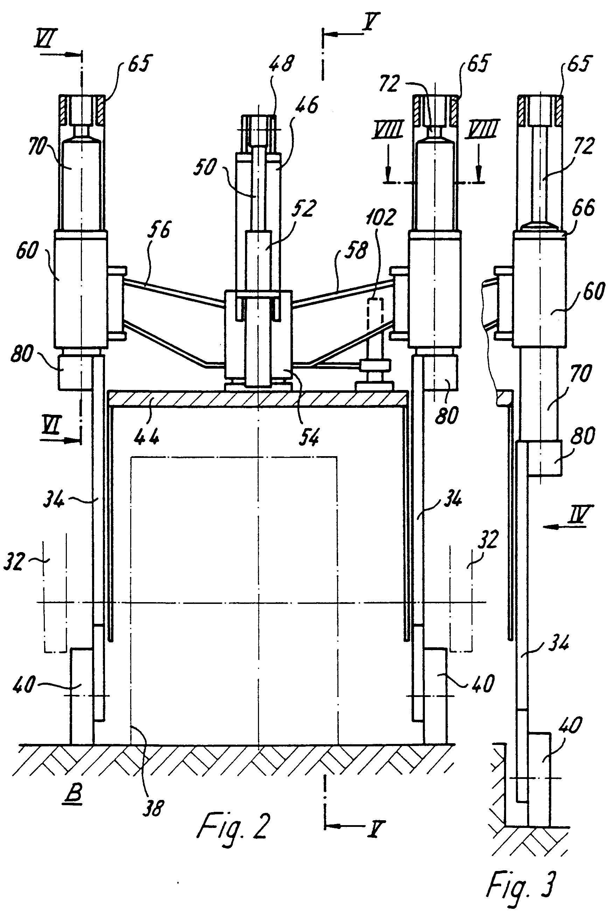

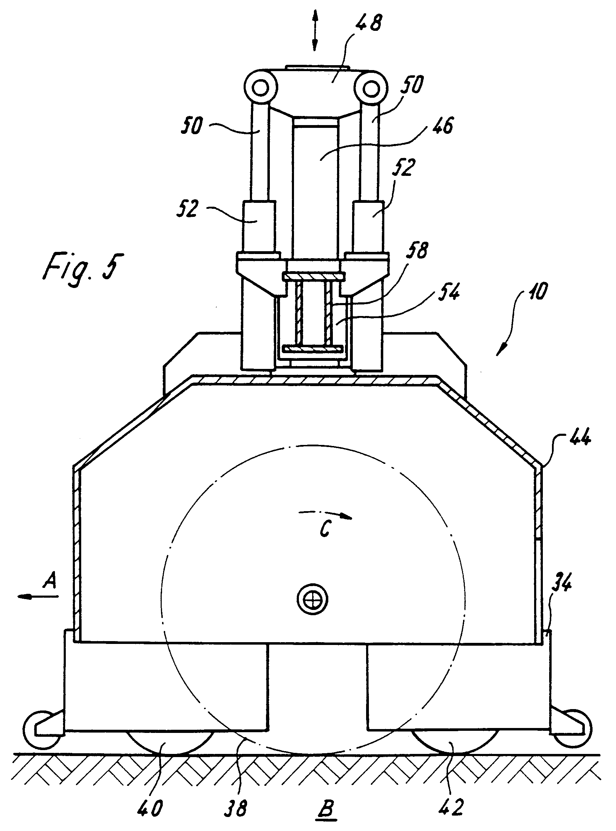

Auf die Haube 44 ist eine Mittelsäule 46 aufgebracht, die an ihrem oberen freien Ende mit einem, aus zwei parallel angeordneten Teilen bestehenden Querträger 48 fest verbunden ist, siehe hierzu insbesondere Fig.2. Der Querträger 48 erstreckt sich in bezug auf die Längsachse der Fräsmaschine 10 zu gleichen Teilen nach vorne und nach hinten. An den freien Enden des Querträgers 48 ist jeweils ein Ende eines Kolbens 50 angelenkt, der jeweils in einen Tiefensteuerungszylinder 52 eingreift, siehe insbesondere Fig. 5.

Die beiden Tiefensteuerungszylinder 52 der beiden Kolben 50 sind an einer die Mittelsäule 46 umgreifenden und führenden Traversenbuchse 54 fest angebracht. An die Traversenbuchse 54 sind in bezug auf Fig. 2 auf der linken und rechten Seite jeweils eine Traverse 56, 58 angeschweißt. Die Fräswalze 38, deren Welle 36 auch in der Haube 44 gelagert ist, die Haube 44, die Mittelsäule 46, der Querträger 48 und die Kolben 50 werden für die Höhenverstellung der Fräswalze 38 gemeinsam gegenüber den Tiefensteuerungszylindern 52 und der Traversenbuchse 54 bewegt, die Teil der Trageeinneit sind. Die Verstellung erfolgt in an sich bekannter Weise hydraulisch, indem jeweils der Kolben 50 von der einen oder anderen Seite mit Hydraulikflüssigkeit, also mit Druck, beaufschlagt wird.

Die der Traversenbuchse 54 entfernt gelegenen Enden der Traversen 56 und 58 sind jeweils mit einer Führungsbuchse 60 verschraubt.

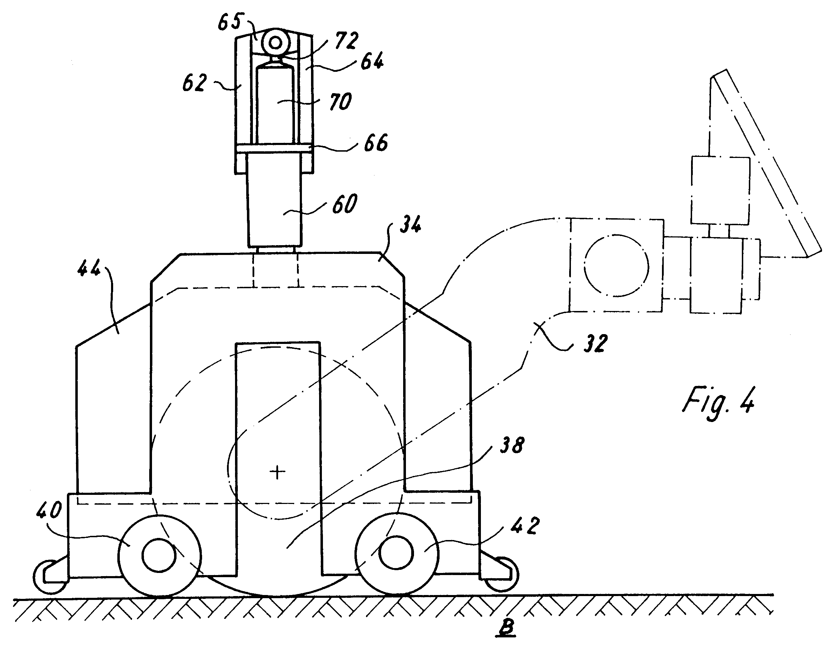

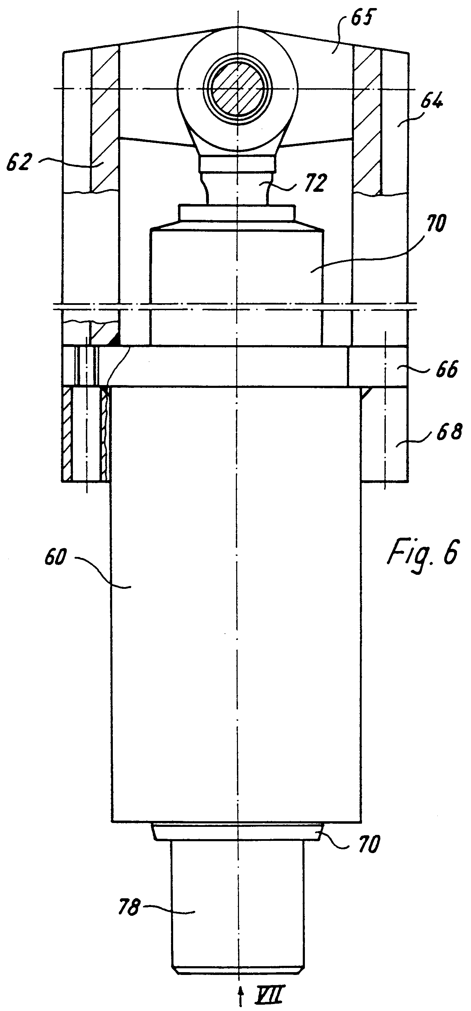

Insbesondere der Fig. 4 und Fig. 6 ist zu entnehmen, daß in bezug auf die Längsachse der Fräsmaschine 10 die Führungsbuchse 60 jeweils in ihrem oberen Bereich vorne und hinten mit jeweils einer sich nach oben erstreckenden Stütze 62 und 64 verbunden ist. Die Stützen 62 und 64 sind an ihrem oberen freien Ende über ein zweiteiliges Joch 65, siehe hierzu Fig. 2, 3 und 9, und an ihrem unteren freien Ende über eine Platte 66 miteinander verbunden.

Die Platte 66 weist Gewindebohrungen für einen flanschförmigen Ansatz 68 der Führungsbuchse 60 auf, siehe Fig. 6. Somit sind die Stützen 62 und 64 über die Platte 66, den flanschförmigen Ansatz 68 und entsprechenden Schrauben 82 mit der Führungsbuchse 60 fest verbunden.

Die Führungsbuchse 60 sowie die Platte 66 umgreifen einen konzentrisch zu ihnen angeordneten sowie verschiebbar gelagerten Führungszylinder 70. In dem Führungszylinder 70 ist ein als Innenführung dienender Kolben 72 gelagert, dessen oberes Ende mit dem Joch 65 gelenkig verbunden ist. Die Gelenkachse verläuft dabei im wesentlichen horizontal sowie parallel zur Drehachse der Fräswalze 38.

Der Kolben 72 teilt den Führungszylinder 70 innen in eine obere erste und untere zweite Hydraulikkammer 74, 76. Diese Hydraulikkammern 74 und 76 sind, wie weiter unten noch ausführlich erläutert wird, mit einer Hydraulikquelle auf dem Bagger 12 verbunden. Durch eine gesteuerte Zufuhr von Hydrauliköl in die erste bzw. zweite Hydraulikkammer 74 bzw. 76 ist der Führungszylinder 70 gegenüber dem fest angeordneten Kolben 72, dem Joch 65, den Stützen 62 und 64, der Platte 66, sowie der Führungsbuchse 60 verschiebbar.

Der Führungszylinder 70 weist an seinem unteren Ende einen Zapfen 78 auf, der wiederum in einen Block 80 des Seitenteils 34 eingreift. Über diesen Block 80 ist der Führungszylinder 70 fest mit dem Seitenteil 34 verbunden. Das Seitenteil 34 mit den Rädern 40 und 42 ist somit zusammen mit dem Führungszylinder 70 gegenüber der als Außenführung dienenden Führungsbuchse 60 und der Traverse 56, 58 sowie der Traversenbuchse 54 höhenverstellbar. Die Führungsbuchse 60 mit den Stützen 62 , 64, dem Joch 65, dem Kolben 72, den Traversen 56, 58 und der Traversenbuchse 54 mit den Tiefensteuerungszylindern 52 bilden im wesentlichen die Trageeinheit der Fräswalze 10.

Die Fräswalze 10 ist im wesentlichen in bezug auf ihre Längsmittelebene symmetrisch ausgebildet, so daß die auf beiden Seiten der Fräswalze 38 angeordneten Seitenteile 34 in der beschriebenen Weise mit einem Führungszylinder 70 verbunden und gegenüber einer Führungsbuchse 60 höhenverstellbar sind.

In Fig. 2 sind die Räder 40, 42 der beiden Seitenteile 34 der Fräsmaschine 10 auf einem Niveau des abzufräsenden Oberflächenbelags B angeordnet.

Die Fig. 3 zeigt lediglich einen Teil der Fräsmaschine 10, nämlich das in bezug auf Fig. 2 rechte Seitenteil 34 in einer anderen Verstellposition gegenüber der oben erwähnten Trageeinheit der Fräsmaschine 10. Der Oberflächenbelag B ist nämlich nach Fig. 3 bereits um einen vorbestimmten Betrag bereichsweise abgefräst worden. Jedoch ist noch ein verbleibender Bereich des Oberflächenbelags B abzufräsen. Dieser Übergang zwischen dem abgefrästen Oberflächenbelag B und dem noch abzufräsenden Oberflächenbelag B ist in Fig. 3 dargestellt. Dabei ist das rechte Seitenteil 34 abgesenkt, d.h. die Räder 40, 42 stehen auf dem bereits abgefrästen Oberflächenbelag B, wohingegen die Räder 40, 42 des linken Seitenteils 34 auf dem noch nicht abgefrästen Oberflächenbelag B stehen. Das rechte Seitenteil 34 mit dem Führungszylinder 70 ist gegenüber der Trageeinheit nach unten ausgefahren, so daß die Fräswalze 38 in einer waagerechten Position gehalten wird.

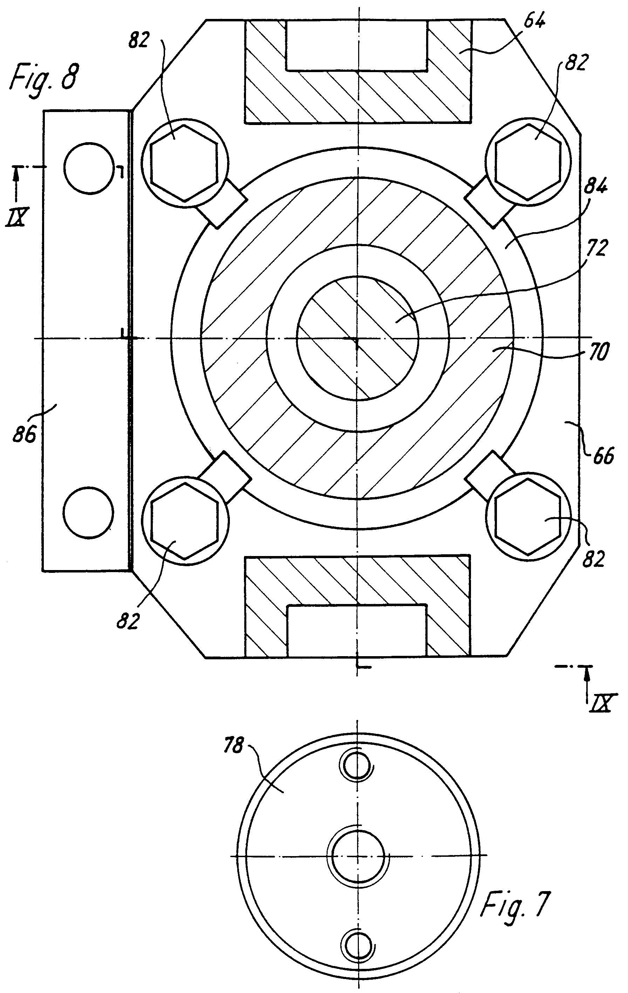

In Fig. 7 ist eine Ansicht gemäß dem Pfeil VII von Fig. 6 dargestellt. Sie zeigt den unteren Zapfen 78 des Führungszylinders 70.

Der Fig. 8, eine Schnittansicht gemäß der Linie VIII-VIII von Fig. 2, ist deutlich zu entnehmen, daß die Stützen 62 und 64 im Querschnitt U-förmig ausgebildet sind. Desweiteren ist die Platte 66 über vier Schrauben 82 mit der Führungsbuchse 60 verbunden. Über die Schrauben 82 ist ein Dichtungsring 84 gesichert, der einen dichtenden Abschluß zwischen dem Führungszylinder 70 und der Platte 66 bzw. der Führungsbuchse 60 gewährleistet und ein Eindringen von Schmutz o. dgl. in den Innenraum zwischen der Führungsbuchse 60 und dem Führungszylinder 70 verhindert.

Die Führungsbuchse 60 ist mit einem oberen und unteren Flansch 86 versehen, über dem sie mit der Traverse 56 bzw. 58 verschraubt ist.

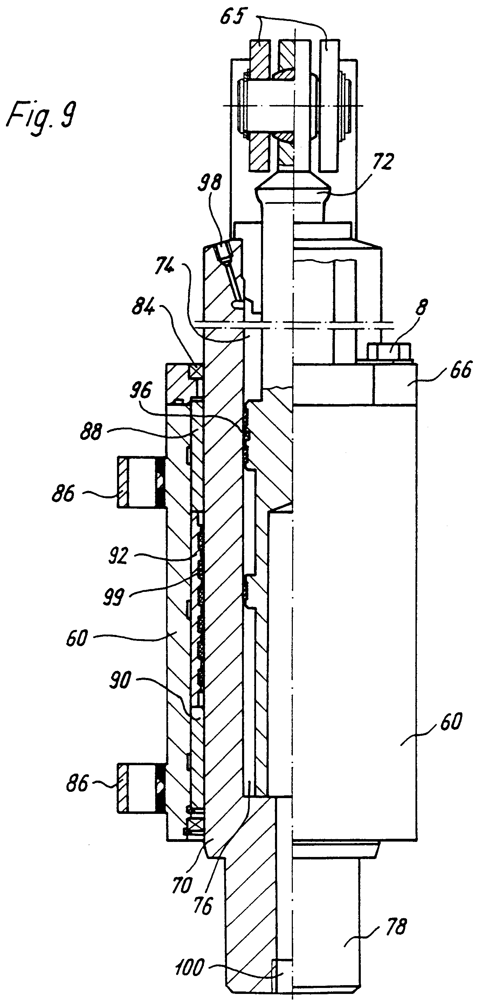

In der Fig. 9 ist deutlich die Lagerung des Führungszylinders 70 sowie die Anordnung des Kolbens 72 im Führungszylinder 70 gezeigt. An die Führungsbuchse 60 sind die Flansche 86 seitlich angeschweißt. Die Führungsbuchse 60 ist mit Gleitlagern 88 und 90 versehen, zwischen denen in einer Aufnahme 92 Führungsbänder 94 eingebracht sind. Die Führungsbänder 94 dienen unter anderem zur Dämpfung von Vibrationen, die in der Fräsmaschine 10 auftreten.

Der Kolben 72, der konzentrisch im Inneren des Führungszylinders 70 angeordnet ist, teilt, wie oben erwähnt, den Innenraum des Führungszylinders 70 in die obere erste Hydraulikkammer 74 und die untere zweite Hydraulikkammer 76. Damit die Hydraulikkammern 74 und 76 dichtend voneinander getrennt sind, ist eine Dichtung 96 zwischen den beiden Hydraulikkammern 74 und 76 in den Kolben 72 eingebracht. Sowohl die erste Hydraulikkammer 74 als auch die zweite Hydraulikkammer 76 sind über einen Anschluß 98 bzw. 100 mit der in der Zeichnung nicht dargestellten Hydraulikquelle auf dem Bagger 12 verbunden.

Soll nun beispielsweise der Führungszylinder 70 mit dem daran angeschlossenen Seitenteil 34 und den Rädern 40 und 42 nach unten verfahren werden, so wird über den Anschluß 98 aus der Hydraulikkammer 74 Hydraulikflüssigkeit, beispielsweise Hydrauliköl, ausgebracht und in die Hydraulikkammer 76 eingebracht. Unter dem Druck der Hydraulikflüssigkeit wird der Führungszylinder 70 in vorbestimmter Weise nach unten bewegt, bis er seine vorbestimmte Position erreicht hat.

Die Tiefensteuerungszylinder 52 sind ebenfalls an die Hydraulikquelle angeschlossen. Da die Verstellung der Fräswalze 38 grundsätzlich bekannt ist, wird hierauf nicht näher eingegangen, sondern lediglich festgehalten, daß über die Kolben 50 und dem Querträger 48 die Mittelsäule 46 und somit die Haube 44 mit der Fräswalze 32 im Zusammenwirken mit der Schwinge 32 in vorbestimmter Weise verstellt werden. Während des Drehens der Fräswalze 38 wirken hohe Kräfte und Momente, insbesondere um eine vertikale Achse. Um insbesondere die um eine vertikale Achse wirkenden Momente günstig aufnehmen zu können, ist eine Drehmomentenstütze 102 vorgesehen.

Der Führungszylinder 70 ist aus einem unter Druck verformbaren Werkstoff ausgebildet. Mit Beaufschlagung der Kammern 74 und 76 mit Hydraulikflüssigkeit und somit mit Druck vergrößert sich der Querschnitt des Führungszylinders 70 und sein Wandungsmantel drückt gegen die Gleitlager 88 und 90 sowie gegen die als Federelemente wirkenden Führungsbänder 94. Auf diese Weise wird ein montagebedingtes bzw. auf Grund von Toleranzen bedingtes Spiel zwischen dem Führungszylinder 70 und der Lagerbuchse 60 eleminiert. Als Folge davon wird eine günstige Kraftübertragung von den Rädern 40, 42 auf die Trageeinneit und umgekehrt ermöglicht. Auf der einen Seite durch die verformbare Ausbildung des Führungszylinders 70 und auf der anderen Seite durch die Führungsbänder 94 wird eine im wesentlichen spielfreie, aber auch gleitbare sowie durch den Betrieb der Fräswalze 38 notwendig gedämpfte, also vibrationsarme Lagerung der Seitenteile 34 gewährleistet, die hohe Kräfte und Momente unter Berücksichtigung der Elastizität der Bauteile übertragen kann.

Die Erfindung zeichnet sich somit durch ihre einfache und äußerst stabile Bauweise aus. Eine Anpassung der Räder 40, 42 an die verschiedenen Oberflächenniveaus der abzufräsenden Fahrbahndecke ist durch die erfindungsgemäße Fräsmaschine 10 nunmehr in einfacher Weise möglich. Dabei können sowohl die links von der Fräswalze 38 als auch die rechts von der Fräswalze 38 angeordneten Räder 40 und 42 in der beschriebenen Weise unabhängig voneinander verstellt werden.

Dies ist insbesondere dann von Nöten, wenn streifenweise nebeneinander eine Fahrbahndecke abgefräst werden soll. Dann ist es nämlich erforderlich, daß auf der einen Seite der Fräswalze 38 die Räder 40 und 42 auf dem noch abzufräsenden Oberflächenbelag B und die auf der anderen Seite der Fräswalze 38 angeordneten Räder 40 und 42 auf dem bereits um einen vorbestimmten Betrag verringerten Oberflächenbelag B stehen. Um dann einen gleichmäßigen Abtrag des Belags zu ermöglichen, wird über die Höhenverstellung der Räder 40, 42 und der Seitenteile 34 die Fräswalze 38 waagerecht ausgerichtet. Durch ein Verschwenken nach unten der Schwinge 32 und ein vorbestimmtes Steuern der Hydraulik der Kolben/Zylinderanordnung 50/52 wird die Fräswalze 38 während des Drehens - in Richtung des Pfeils C - in den Belag eingefräst und anschließend über diesen verfahren - durch ein Schubfahrzeug, wie den Bagger 12, in Richtung A nach Fig. 5 -, so daß sich ein weiterer abgefräster Streifen in der Fahrbahndecke ergibt. Dieses Verfahren kann in beide Richtungen wiederholt durchgeführt werden, da die Räder 40 und 42 beider Seiten der Fräsmaschine 10 höhenverstellbar sind.

Durch die unabhängig voneinander durchzuführende Höhenverstellung der beiden Seitenteile 34 ist natürlich auch ein gezieltes Schrägfräsen möglich, wodurch sich die Einsatzmöglichkeiten der Fräsmaschine 10 vergrößern.

Die erfindungsgemäße Fräsmaschine 10 ist äußerst robust und raumsparend ausgeführt. Insbesondere durch die Höhenverstellung über die Führungszylinder 70 ist es möglich, große Kräfte und Momente von der Trageeinheit auf die Seitenteile 34 und die Räder 40 und 42 zu übertragen.

Desweiteren ist die Herstellung der Betrieb der Fräsmaschine 10 einfach durchführbar, da sowohl die Fräswalze 38 als auch die Seitenteile 34 mit den Rädern 40 und 42 hydraulisch betrieben werden. Zusätzlich ist für den Antrieb der Fräswalze 38 ein Hydraulikmotor vorgesehen, der hinter der Fräswalze 38 an der Schwinge 32 angeordnet ist. Für den Hydraulikmotor, für die Höhenverstellung der Seitenteile 34 als auch für die Höhenverstellung der Fräswalze 38 ist eine Hydraulikquelle vorgesehen, die auf dem Bagger 12 angeordnet ist. Die einzelnen Hydrauliksysteme sind über einen im Einzelnen nicht dargestellten Anschluß an der Schwinge 32 mit der Hydraulikquelle auf dem Bagger 12 verbindbar. Die Höhenverstellung der beiden Seitenteile 34 mit dem Führungszylinder 70 wird durch eine hier nicht dargestellte Steuereinrichtung bewirkt.

Beide Seitenteile 34 der Fräsmaschine 10 sind unabhängig voneinander höhenverstellbar. Ebenso ist die Höhenverstellung der Fräswalze 38 unabhängig von der Höhenverstellung der Seitenteile 34 steuerbar.

### Bezugszeichenliste:

- 10: Fräsmaschine
- 12: Bagger
- 14: Ausleger
- 16: Werkzeugstiel
- 18: Anlenkpunkt
- 20: Anlenkpunkt
- 22: Kolben/Zylinder-Anordnung
- 24: Schwenkhebel
- 26: Schnellwechselplatte
- 28: zweites Gelenk
- 30: erstes Gelenk
- 32: Schwinge
- 34: Seitenteil
- 36: Welle für Fräswalze
- 38: Fräswalze
- 40: Rad - vorne
- 42: Rad - hinten
- 44: Haube
- 45: Ausnehmung
- 46: Mittelsäule
- 48: Querträger
- 50: Kolben
- 52: Tiefensteuerungszylinder
- 54: Traversenbuchse
- 56: Traverse - links
- 58: Traverse - rechts
- 60: Führungsbuchsen
- 62: vordere Stütze
- 64: hintere Stütze
- 65: Joch
- 66: Platte
- 68: flanschförmiger Ansatz
- 70: Führungszylinder
- 72: Kolben
- 74: obere erste Hydraulikkammer
- 76: untere zweite Hydraulikkammer
- 78: unterer Zapfen
- 80: Block
- 82: Schrauben
- 84: Dichtungsring
- 86: Flansch
- 88: Gleitlager
- 90: Gleitlager
- 92: Aufnahme
- 94: Führungsbänder
- 96: Dichtung
- 98: Anschluß - oben
- 100: Anschluß - unten
- 102: Drehmomentstütze
- A: Verfahrrichtung
- B: Oberflächenbelag
- C: Drehrichtung

## Patentansprüche

1. Fräsmaschine (10), die zum Abfräsen von Oberflächenbelägen (B), insbesondere Asphalt, durch eine Zug- und/oder Schubmaschine (12) über den abzufräsenden Oberflächenbelag (B) verfahren wird, eine Fräswalze (38) und eine mit Rädern (40, 42), Rollen o.ä. verbundene Trageeinneit (54, 56, 58, 60), einen Antrieb für die relativ zur Trageeinheit (54, 56, 58, 60) höhenverstellbare und in der Trageeinneit (54, 56, 58, 60) gelagerte Fräswalze (38) sowie zumindest ein Rad (40, 42) aufweist, das gegenüber der Trageeinneit (54, 56, 58, 60) höhenverstellbar ausgebildet ist, **dadurch gekennzeichnet**, daß die Höhenverstellung des Rads bzw. der Räder (40, 42) hydraulisch erfolgt.

2. Fräsmaschine nach Anspruch 1, **dadurch gekennzeichnet**, daß auf beiden Seiten der Fräswalze (38) zumindest ein Rad (40, 42) vorgesehen ist und diese Räder (40, 42) unabhängig voneinander in der Trageeinneit (54, 56, 58, 60) hydraulisch höhenverstellbar gelagert sind.

3. Fräsmaschine nach Anspruch 1 oder 2, **dadurch gekennzeichnet**, daß zumindest auf einer Seite der Fräswalze (38) zumindest zwei Räder (40, 42) hintereinander angeordnet, in einem höhenverstellbaren Seitenteil (34) gelagert und zusammen mit dem Seitenteil (34) gegenüber dem Trageeinheit (54, 56, 58, 60) hydraulisch höhenverstellbar ausgebildet sind.

4. Fräsmaschine nach einem der vorangehenden Ansprüche, **dadurch gekennzeichnet**, daß das Seitenteil (34) über eine Innenführung (72) und eine Außenführung (60, 88, 90, 92, 94) höhenverstellbar in der Trageeinheit (54, 56, 58, 60) gelagert ist.

5. Fräsmaschine nach einem der vorangehenden Ansprüche, insbesondere nach Anspruch 4, **dadurch gekennzeichnet**, daß das höhenverstellbare Rad (40, 42) und/oder das Seitenteil (34) mit dem Rad (40, 42) bzw. den Rädern (40, 42) mit einem Führungszylinder (70) verbunden ist, der in einer eine Außenführung bildenden Führungsbuchse (60) der Trageeinheit (54, 56, 58, 60) verschiebbar gelagert und in den ein mit der Trageeinheit (54, 56, 58) fest verbundener, eine Innenführung bildender Kolben (72) eingebracht ist.

6. Fräsmaschine nach einem der vorangehenden Ansprüche, **dadurch gekennzeichnet**, daß die Höhenverstellung der Fräswalze (38) hydraulisch erfolgt.

7. Fräsmaschine nach einem der vorangehenden Ansprüche, **dadurch gekennzeichnet**, daß der Antrieb für die Fräswalze (38) einen Hydraulikmotor aufweist.

8. Fräsmaschine nach einem der vorangehenden Ansprüche, **dadurch gekennzeichnet**, daß eine gemeinsame Hydraulikquelle für die Höhenverstellung der Fräswalze (38) und/oder des Rads (40, 42) bzw. der Räder (40, 42) und für den Hydraulikmotor vorgesehen ist.

9. Fräsmaschine nach einem der vorangehenden Ansprüche, **dadurch gekennzeichnet**, daß die Hydraulikquelle außerhalb der Fräsmaschine (10) angeordnet und dafür ein Anschluß vorgesehen ist.

10. Fräsmaschine nach einem der Ansprüche 5 bis 9, **dadurch gekennzeichnet**, daß der Kolben (72) über ein im wesentlichen um eine horizontale Achse drehbares Gelenk mit der Trageeinneit (54, 56, 58, 60) verbunden ist.

11. Fräsmaschine nach Anspruch 10, **dadurch gekennzeichnet**, daß die Achse des drehbaren Gelenks des Kolbens (72) parallel zur Drehachse der Fräswalze (38) verläuft.

12. Fräsmaschine nach einem der Ansprüche 5 bis 11, **dadurch gekennzeichnet**, daß der Kolben (72) zwischen zwei Stützen (62, 64) angeordnet und an einem die Stützen (62, 64) miteinander verbindenden Joch (65) angelenkt ist.

13. Fräsmaschine nach einem der vorangehenden Ansprüche, **dadurch gekennzeichnet**, daß der Querschnitt des Führungszylinders (70) änderbar ausgebildet ist, so daß eine im wesentlichen spielfreie Lagerung des Führungszylinders (70) in der Führungsbuchse (60) ermöglicht wird.

14. Fräsmaschine nach Anspruch 13, **dadurch gekennzeichnet**, daß der Führungszylinder (70) durch den Druck der Hydraulik elastisch verformbar ist.

15. Fräsmaschine nach einem der vorangehenden Ansprüche, **dadurch gekennzeichnet**, daß Mittel (94) zur Dämpfung von Vibrationen in Lagern zur Höhenverstellung des Rades (40, 42), der Räder (40, 42) bzw. des Seitenteils (34) o.ä. eingebracht sind.

16. Fräsmaschine nach Anspruch 15, **dadurch gekennzeichnet**, daß die Mittel zur Dämpfung durch Federelemente, wie Führungsbänder (94), gebildet sind.

17. Fräsmaschine nach einem der vorangehenden Ansprüche, **gekennzeichnet** durch eine im wesentlichen zu ihrer Längsmittelebene symmetrische Ausbildung.

18. Fräsmaschine nach einem der vorangehenden Ansprüche, **dadurch gekennzeichnet**, daß zwischen der Fräswalze (38) und der Trageeinneit (54, 56, 58, 60) eine Drehmomentensicherung, wie eine Drehmomentenstütze (102), wirkt.
